# FASCICULE DE BREVET EUROPEEN

(11) **EP 1 223 783 B1**
(45) Date de publication et mention de la délivrance du brevet: **19.03.2008**
(21) Numéro de dépôt: 02290058.3
(22) Date de dépôt: 10.01.2002
(51) Int. Cl.: H04Q 7/38, G06F 9/46

(54) **Procédé de gestion de ressources de traitement dans un système de radiocommunications mobiles**
Verfahren zum Bereitstellung einer Verarbeitungsbetriebsmittelverwaltung in einem mobilen Funkkommunikationssystem
Method for processing resource management in a mobile radiocommunication system

(30) Priorité: 12.01.2001 FR 0100440; 23.02.2001 FR 0102527
(43) Date de publication de la demande: 17.07.2002
(73) Titulaire: Alcatel Lucent, 75008 Paris (FR)
(72) Inventeur: Agin, Pascal, 94370 Sucy en Brie (FR)
(74) Mandataire: El Manouni, Josiane

(56) Documents cités:
- WO-A-00/33589
- WO-A-00/54536
- GB-A- 2 347 317
- EUROPEAN TELECOMMUNICATIONS STANDARDS INSTITUTE: "Technical Specification;Universal Mobile Telecommunications System (UMTS); UTRAN lub Interface NBAP Signalling (3G TS 25.433 version 3.2.0 Release 1999)" ETSI TS 125 433 V3.2.0, XX, XX, juin 2000 (2000-06), XP002166441

## Description

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

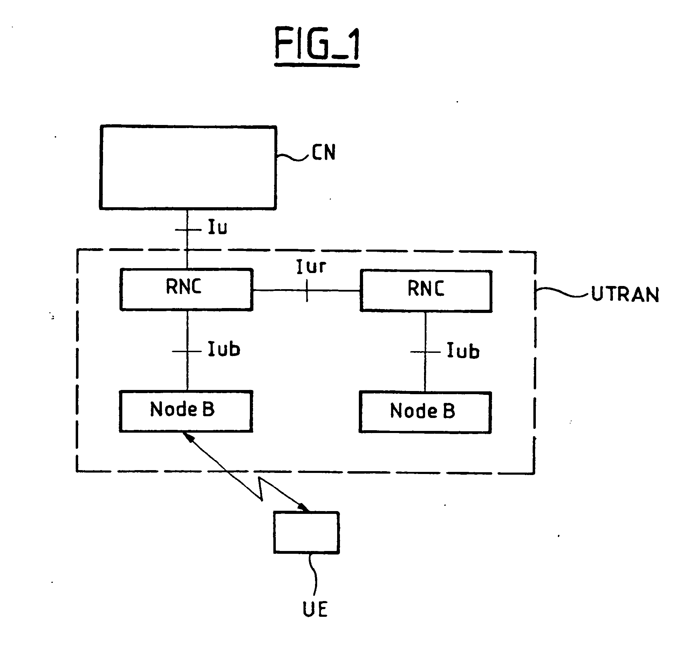

D'une manière générale, un réseau de radiocommunications mobiles comporte, comme rappelé sur la figure 1, un ensemble de stations de base et de contrôleurs de stations de base. Dans l'UMTS, ce réseau est aussi appelé UTRAN, pour "UMTS Terrestrial Radio Access Network", les stations de base sont aussi appelées Node B, et les contrôleurs de stations de base sont aussi appelés RNC (pour "Radio Network Controller" en anglais).

L'UTRAN est en relation d'une part avec des stations mobiles (appelées aussi équipements utilisateur, ou "User Equipment" ou UE), par une interface appelée interface « Uu », et d'autre part avec un coeur de réseau, ou CN (pour « Core Network » en anglais), par une interface appelée interface « lu ».

Comme rappelé sur la figure 1, les RNC sont reliés :
- aux Node B par une interface appelée interface « lub »,
- entre eux par une interface appelée interface « lur »,
- au coeur de réseau CN par une interface appelée interface « lu ».

Pour un Node B donné, le RNC qui le contrôle est aussi appelé CRNC (pour « Controlling Radio Network Controller » en anglais), et est donc relié à ce Node B via l'interface « lub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « lu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control " en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement des Node B qu'il contrôle. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les Node B des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

Il serait donc souhaitable de tenir compte de la capacité de traitement des stations de base (ou Node B) pour le contrôle de la charge dans un tel système.

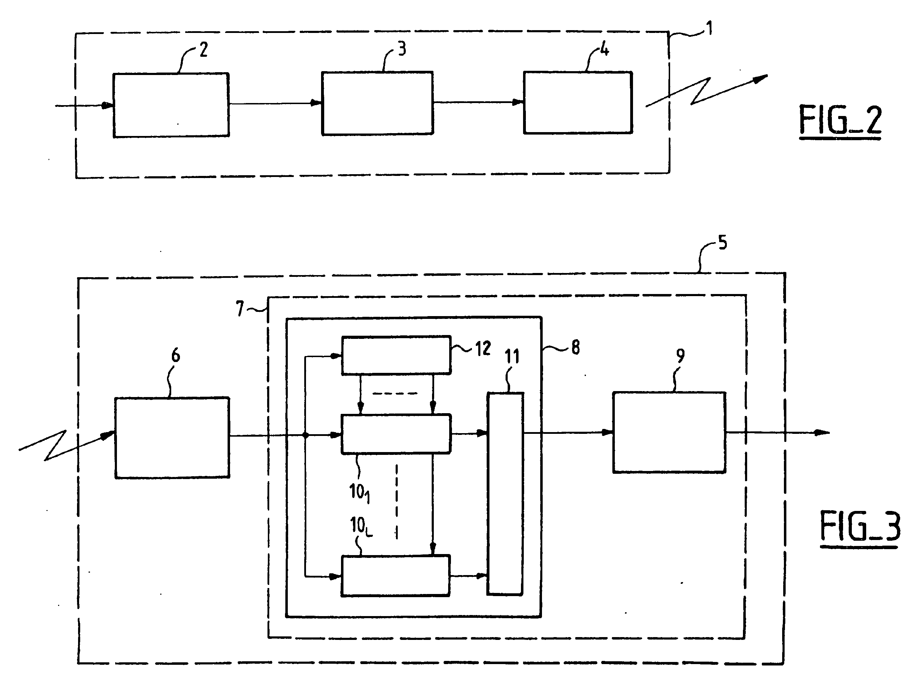

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:
- des moyens de codage-canal 2,
- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre ou débit offert pour sa transmission. L'adaptation de débit peut inclure des techniques telles que répétition et/ou poinçonnage, le taux d'adaptation de débit étant alors défini comme le taux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement.

On rappelle que dans un système tel que noatmment l'UMTS le débit net (appelé aussi par la suite plus simplement « débit ») peut varier au cours d'une même communication, et que le facteur d'étalement peut en outre varier en fonction du débit à transmettre.

Sur la figure 3 est illustré un récepteur 5 comportant:
- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-traiets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés 10₁ à 10_{L}, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base.

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Comme indiqué précédemment, il est donc souhaitable de tenir compte de la capacité de traitement d'une station de base, pour le contrôle de la charge dans un système tel que le système UMTS par exemple.

Ainsi, pour le système UMTS, il est spécifié dans le document 3G TS 25.433 publié par le 3GPP ("3^{rd} Generation Partnership Project") que le Node B signale au CRNC sa capacité de traitement globale (appelée "capacity credit"), et la quantité de cette capacité de traitement globale, ou coût, pour chaque valeur du facteur d'étalement (ou « spreading factor » en anglais, ou SF) possible dans ce système. L'ensemble des coûts pour les différentes valeurs possibles du facteur d'étalement est aussi appelé loi de consommation de capacité (ou « capacity consumption law» en anglais). De telles informations sont signalées par un Node B au CRNC à chaque fois que la capacité de traitement de ce Node B est changée, en utilisant un message appelé « Resource Status Indication », ou en réponse à une requête du CRNC en utilisant un message appelé « Audit Response ».

Le CRNC met alors à jour le crédit restant, sur la base de la loi de consommation, notamment, dans le système UMTS:
- pour les canaux dédiés, lors des procédures d'établissement, addition, effacement, ou reconfiguration, d'un lien radio (ou en anglais, « radio link set-up », « radio link addition », « radio link deletion », « radio link reconfiguration ») telles que définies dans le document 3G TS 25.433 publié par le 3GPP,
- pour les canaux communs, lors des procédures d'établissement, effacement, ou reconfiguration, d'un canal commun (ou en anglais, « common transport channel set-up », « common transport channel deletion », « common transport channel reconfiguration ») telles que définies dans le document 3G TS 25.433 publié par le 3GPP.

De telles procédures sont aussi appelées procédures NBAP (pour « Node B Application Part » en anglais), et les messages de signalisation correspondants sont aussi appelés messages NBAP.

Dans la norme 3G TS 25.433, deux lois de consommation distinctes ont été définies, une pour les canaux dédiés, et une pour les canaux communs. On rappelle qu'un canal dédié est un canal alloué à un utilisateur donné, alors qu'un canal commun est un canal partagé entre plusieurs utilisateurs. Par exemple, dans le système UMTS, le canal DCH (pour « Dedicated CHannel » en anglais) est un canal dédié, et les canaux tels que notamment RACH (pour « Random Access CHannel » en anglais), FACH (pour « Forward Access CHannel » en anglais), CPCH (pour « Common Packet CHannel » en anglais), DSCH (pour « Downlink Shared CHannel » en anglais), ...etc, sont des canaux communs.

Ainsi que l'a observé le demandeur, le mécanisme de crédit tel que décrit dans la norme 3G TS 25.433 dans son état actuel pose encore certains problèmes.

Un premier problème est qu'il n'est pas tenu compte des spécificités du canal DSCH.

Bien que le canal DSCH soit en réalité un canal commun, il est toujours associé à un canal dédié DCH, et les procédures d'établissement, d'effacement ou de reconfiguration qui concernent le canal DSCH concernent simultanément le canal DCH. Par exemple, pour une opération de « radio link setup », une ou deux opérations peuvent être effectuées : une pour le canal DCH et éventuellement une pour le canal DSCH, si un canal DSCH est associé au canal DCH.

Ainsi, bien que le canal DSCH soit un canal commun, il serait plus logique (afin de simplifier les opérations de mise à jour du crédit de capacité), que ce canal soit pris en compte dans la loi de consommation pour les canaux dédiés.

Mais, pour les canaux dédiés, le coût d'allocation est différent suivant que le lien radio considéré est ou non un premier lien radio (le deuxième cas correspondant à la situation où l'UE a plus d'un lien radio dans le même Node B, c'est-à-dire où l'UE est dans une situation dite, en anglais, de « softer-handover » avec ce Node B). Ainsi, la norme 3G TS 25.433 spécifie que pour un premier lien radio, deux coûts sont pris en compte, à savoir un coût pour un lien radio (ou « Radio Link cost », ou encore « RL cost ») et un coût pour un ensemble de liens radio (ou « Radio Link Set cost » ou encore « RLS cost »), alors que pour un lien radio additionnel, seul le coût « RL cost » est pris en compte.

Or, la technique de « soft-handover » ou de « softer-handover » n'est pas utilisée d'une manière générale pour les canaux communs, et en particulier pour le canal DSCH. Le canal DSCH pose donc des problèmes particuliers pour l'application de ce mécanisme de crédit, qu'il convient de résoudre.

Un des buts de la présente invention est d'apporter une solution à ces problèmes.

Un des objets de la présente invention est ainsi un procédé de gestion de ressources de traitement dans un système de radiocommunications mobiles, dans lequel un contrôleur de stations de base gère des ressources radio et des ressources de traitement correspondantes, ces dernières étant prévues dans une station de base, procédé dans lequel:
- la station de base signale au contrôleur de stations de base sa capacité de traitement globale, ou crédit de capacité, et la loi de consommation, ou quantité de cette capacité de traitement globale, ou coût, en fonction des ressources radio nécessaires,
- le contrôleur de stations de base met à jour le crédit de capacité sur la base de la loi de consommation,
- pour le cas de ressources radio correspondant à des canaux dédiés, un coût d'allocation différent est prévu pour le cas de premier lien radio, et pour le cas de lien radio additionnel,
procédé caractérisé en ce que :
- pour le cas de ressources radio correspondant à un canal commun associé à un canal dédié, ladite mise à jour est effectuée, dans le cas de premier lien radio sur la base du coût pour le canal dédié et d'un coût pour le canal commun associé, et dans le cas de lien radio additionnel sur la base du coût pour le canal dédié seul.

Suivant une autre caractéristique,
- pour le cas de canal dédié, le coût pour un premier lien radio inclut un coût pour un lien radio et un coût additionnel, et le coût pour un lien radio additionnel inclut seulement le coût pour un lien radio.
- pour le cas de canal commun associé à un canal dédié, ledit coût pour le canal commun associé correspond au coût d'un lien radio pour le canal dédié.

Suivant une autre caractéristique, ledit coût pour le canal commun associé est spécifique à ce canal.

Suivant une autre caractéristique, ledit canal commun associé à un canal dédié est un canal de type DSCH (« Downlink Shared CHannel »).

Suivant une autre caractéristique, le coût est fonction du facteur d'étalement.

Un outre objet de la présente invention est un système de radiocommunications mobiles, dans lequel:
- une station de base (Node B) comporte des moyens pour signaler à un contrôleur de stations de base sa capacité de traitement globale, ou crédit de capacité, et la quantité de cette capacité de traitement globale, ou coût, en fonction des ressources radio nécessaires,
- un contrôleur de stations de base (RNC) comporte des moyens pour mettre à jour le crédit de capacité sur la base de la loi de consommation,
caractérisé en ce que :
- le contrôleur de stations de base comporte des moyens pour, dans le cas de ressources radio correspondant à un canal commun associé à un canal dédié, mettre à jour le crédit de capacité, dans le cas de premier lien radio sur la base du coût pour le canal dédié et d'un coût pour le canal commun associé, et dans le cas de lien radio additionnel sur la base du coût pour le canal dédié seul.

Un autre objet de la présente invention est un contrôleur de stations de base
- comportant des moyens pour recevoir d'une station de base (Node B) sa capacité de traitement globale, ou crédit de capacité, et la quantité de cette capacité de traitement globale, ou coût, en fonction des ressources radio nécessaires,
- caractérisé en ce qu'il comporte des moyens pour, dans le cas de ressources radio correspondant à un canal commun associé à un canal dédié, mettre à jour le crédit de capacité, dans le cas de premier lien radio sur la base du coût pour le canal dédié et d'un coût pour le canal commun associé, et dans le cas de lien radio additionnel sur la base du coût pour le canal dédié seul.

D'autres objets et caractéristiques de la présente invention apparaîtront à la lecture de la description suivante d'exemples de réalisation, faite en relation avec les dessins ci-annexés dans lesquels:
- la figure 1, décrite précédemment, rappelle l'architecture générale d'un système de radiocommunications mobiles, tel que notamment le système UMTS,
- les figures 2 et 3, décrites précédemment, rappellent les principaux traitements utilisés, respectivement en émission et en réception, dans une station de base, telle qu'un Node B pour le système UMTS,
- la figure 4 est un schéma destiné à illustrer un exemple de mise en oeuvre d'un procédé suivant l'invention.

La présente invention a donc notamment pour but de résoudre le problème posé par le mécanisme de crédit tel que décrit dans la norme 3G TS 25.433 dans son état actuel.

Le problème est qu'il n'est pas tenu compte des spécificités du canal DSCH.

La solution suivant l'invention, pour résoudre ce problème, peut aussi être expliquée de la façon suivante.

Puisque le canal DSCH est toujours associé à un canal DCH, il peut être préférable de prendre en compte son coût de traitement dans la loi de consommation des canaux dédiés.

Plusieurs solutions peuvent être adoptées :
- un coût spécifique est ajouté dans la loi de consommation pour le canal DSCH, pour quelques valeurs de facteurs d'étalement ou pour toutes les valeurs possibles de facteurs d'étalement (la deuxième solution étant préférable, c'est-à-dire un coût par facteur d'étalement, comme cela est le cas pour le canal DCH).
- un des coûts spécifiés pour le DL DCH (ou « Downlink DCH », ou DCH dans le sens descendant), soit « DL RL cost », est pris en compte (on notera que seul un coût pour le sens descendant est à prendre à compte puisque le DSCH est un canal descendant seulement et puisque le traitement présente habituellement des différences significatives pour l'émetteur et le récepteur du Node B).

Puisque le soft-handover ne peut pas être utilisé pour le canal DSCH, aucune ressource additionnelle n'est utilisée pour le canal DSCH lorsqu'un nouveau lien radio est ajouté. La solution préférée est donc d'ajouter/changer/enlever un coût pour le canal DSCH une fois seulement, lorsque les messages NBAP concernent un premier lien radio.

Plus précisément :
- lors d'une procédure d'établissement d'un lien radio (ou en anglais « Radio Link Set-up »), le coût DSCH (soit un coût spécifique, soit le coût « DL RL cost » pour le DCH, suivant les deux possibilités indiquées précédemment) est débité du credit de capacité (ce coût est débité une seule fois, quel que soit le nombre de liens radio, contrairement au coût DCH),
- lors d'une procédure d'addition d'un lien radio (ou en anglais « Radio Link Addition »), le crédit de capacité n'est pas modifié à cause du DSCH (mais il peut être changé pour tenir compte du traitement DCH),
- lors d'une procédure de reconfiguration d'un lien radio (ou en anglais « Radio Link Re-configuration »), le crédit de capacité est modifié à cause du canal DSCH une fois seulement (si le nouveau coût DSCH est différent de l'ancien) quel que soit le nombre de liens radio.

De manière générale, pour résoudre ce problème l'invention prévoit donc essentiellement que, pour un canal commun associé à un canal dédié, ladite mise à jour est effectuée, dans le cas de premier lien radio sur la base du coût pour le canal dédié et d'un coût pour le canal commun associé, et dans le cas de lien radio additionnel sur la base du coût pour le canal dédié seul.

Suivant un mode de réalisation avantageux, lorsqu'un canal PDSCH (« Physical Downlink Shared Channel ») est alloué dans la procédure de « Radio Link Set-up », le coût de traitement associé à ce canal PDSCH, égal à « DL RL cost», est débité du credit de capacité, en plus du coût de traitement des liens radio. De façon similaire, le crédit de capacité est crédité de ce coût lorsqu'un canal PDSCH est effacé, et la différence entre le nouveau coût et l'ancien coût est débitée du crédit de capacité (ou créditée si cette différence est négative) lorqu'un canal PDSCH est reconfiguré.

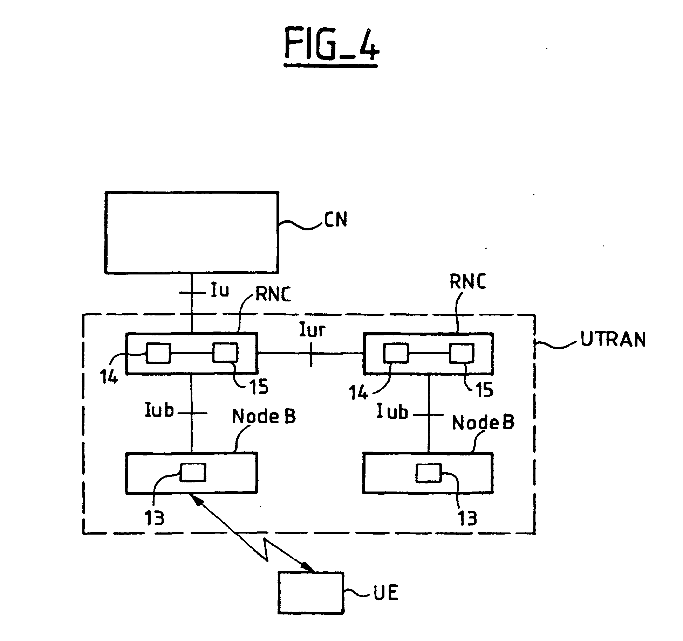

La figure 4 est un schéma destiné à illustrer un exemple de moyens à prévoir dans une station de base (ou Node B dans un système tel que le système UMTS), et dans un contrôleur de stations de base (ou RNC pour un système tel que le système UMTS), pour mettre en oeuvre un tel procédé suivant l'invention.

Une station de base notée Node B comporte ainsi (en plus d'autres moyens qui peuvent être des moyens classiques):
- des moyens notés 13 pour signaler à un contrôleur de stations de base sa capacité de traitement globale, ou crédit de capacité, et la quantité de cette capacité de traitement globale, ou coût, en fonction des ressources nécessaires.

Un contrôleur de stations de base noté CRNC (pour « Controlling Radio Network Controller » comporte ainsi (en plus d'autres moyens qui peuvent être des moyens classiques):
- des moyens notés 14 pour recevoir d'une station de base sa capacité de traitement globale, ou crédit de capacité, et la quantité de cette capacité de traitement globale, ou coût, en fonction des ressources nécessaires,
- des moyens notés 15 pour mettre à jour le crédit de capacité sur la base de la loi de consommation, ladite mise à jour étant effectuée, dans le cas de premier lien radio sur la base du coût pour le canal dédié et d'un coût pour le canal commun associé, et dans le cas de lien radio additionnel sur la base du coût pour le canal dédié seul.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

Dans la description ci-dessus, le coût peut être fonction du facteur d'étalement, comme spécifié dans la norme rappelée précédemment (dans son état actuel). Cependant le principe ainsi décrit n'est pas limité à ce cas, et s'applique également au cas où le coût serait fonction d'un ou plusieurs autres paramètres, tels que notamment le débit, selon d'autres solutions connues par ailleurs.

On notera que le terme de « mise à jour » du crédit de capacité utilisé dans tout ce qui précède est destiné à recouvrir aussi bien des opérations par lesquelles ce crédit de capacité est débité, dans le cas où de nouvelles ressources radio sont requises, que des opérations par lesquelles ce crédit de capacité est crédité, dans le cas où de nouvelles ressources radio ne sont plus nécessaires et sont donc restituées.

Notamment :
- pour les procédures de « radio link set-up », « radio link addition », et « common transport channel set-up », le crédit de capacité est débité,
- pour les procédures de «radio link deletion », et de « common transport channel deletion », le crédit de capacité est crédité,
- pour le cas de « radio link reconfiguration » et de « common transport channel reconfiguration » le crédit de capacité est débité ou crédité selon que la différence entre le coût d'allocation pour le nouveau débit et pour l'ancien débit est négative ou positive.

Dans la description ci-dessus, le coût peut être fonction du facteur d'étalement, comme spécifié dans la norme rappelée précédemment (dans son état actuel). Cependant le principe ainsi décrit n'est pas l'imité à ce cas, et s'applique également au cas où le coût serait fonction d'un ou plusieurs autres paramètres, tels que notamment le débit, selon d'autres solutions connues par ailleurs.

## Revendications

1. Procédé de gestion de ressources de traitement dans un système de radiocommunications mobiles, dans lequel un contrôleur de stations de base gère des ressources radio et des ressources de traitement correspondantes, ces dernières étant prévues dans une station de base, procédé dans lequel:
- la station de base signale au contrôleur de stations de base sa capacité de traitement globale, ou crédit de capacité, et la loi de consommation, ou quantité de cette capacité de traitement globale, ou coût, en fonction des ressources radio nécessaires ,
- le contrôleur de stations de base met à jour le crédit de capacité sur la base de la loi de consommation,
- pour le cas de ressources radio correspondant à des canaux dédiés, un coût différent est prévu pour le cas de premier lien radio, et pour le cas de lien radio additionnel,
procédé **caractérisé en ce que** :
- pour le cas de ressources radio correspondant à un canal commun associé à un canal dédié, ladite mise à jour est effectuée, dans le cas de premier lien radio sur la base du coût pour le canal dédié et d'un coût pour le canal commun associé, et dans le cas de lien radio additionnel sur la base du coût pour le canal dédié seul.

2. Procédé selon la revendication 1, dans lequel :
- pour le cas de canal dédié, le coût pour un premier lien radio inclut un coût pour un lien radio et un coût additionnel, et le coût pour un lien radio additionnel inclut seulement le coût pour un lien radio.
- pour le cas de canal commun associé à un canal dédié, ledit coût pour le canal commun associé correspond au coût d'un lien radio pour le canal dédié.

3. Procédé selon la revendication 1, dans lequel ledit coût pour le canal commun associé est spécifique à ce canal.

4. Procédé selon l'une des revendications 1 à 3, dans lequel ledit canal commun associé à un canal dédié est un canal de type DSCH Downlink Shared CHannel .

5. Procédé selon l'une des revendications 1 à 4, **caractérisé en ce que** le coût est fonction du facteur d'étalement.

6. Procédé selon l'une des revendications 1 à 5, dans lequel lorsqu'un canal Physical Downlink Shared Channel PDSCH est alloué dans une procédure de Radio Link Set-up, le coût de traitement associé à ce canal PDSCH est débité du credit de capacité, en plus du coût de traitement des liens radio.

7. Procédé selon l'une des revendications 1 à 5, dans lequel lorsqu'un canal Physical Downlink Shared Channel PDSCH est effacé, le crédit de capacité est crédité du coût de traitement associé à ce canal PDSCH.

8. Procédé selon l'une des revendications 1 à 5, dans lequel lorsqu'un canal Physical Downlink Shared Channel PDSCH est reconfiguré, la différence entre le nouveau coût et l'ancien coût est débitée du crédit de capacité, ou créditée si cette différence est négative.

9. Système de radiocommunications mobiles, dans lequel:
- une station de base comporte des moyens (13) pour signaler à un contrôleur de stations de base sa capacité de traitement globale, ou crédit de capacité, et la quantité de cette capacité de traitement globale, ou coût, en fonction des ressources radio nécessaires,
- un contrôleur de stations de base comporte des moyens (14) pour mettre à jour le crédit de capacité sur la base de la loi de consommation,
**caractérisé en ce que** le contrôleur de stations de base comporte des moyens pour, dans le cas de ressources radio correspondant à un canal commun associé à un canal dédié, mettre à jour le crédit de capacité, dans le cas de premier lien radio sur la base du coût pour le canal dédié et d'un coût pour le canal commun associé, et dans le cas de lien radio additionnel sur la base du coût pour le canal dédié seul.

10. Système selon la revendication 9, dans lequel lorsqu'un canal Physical Downlink Shared Channel PDSCH est alloué dans une procédure de Radio Link Set-up, le coût de traitement associé à ce canal PDSCH est débité du credit de capacité, en plus du coût de traitement des liens radio.

11. Système selon la revendication 9, dans lequel lorsqu'un canal Physical Downlink Shared Channel PDSCH est effacé, le crédit de capacité est crédité du coût de traitement associé à ce canal PDSCH.

12. Système selon la revendication 9, dans lequel lorsqu'un canal Physical Downlink Shared Channel PDSCH est reconfiguré, la différence entre le nouveau coût et l'ancien coût est débitée du crédit de capacité, ou créditée si cette différence est négative.

13. Contrôleur de stations de base comportant des moyens (14) pour recevoir d'une station de base sa capacité de traitement globale, ou crédit de capacité, et la quantité de cette capacité de traitement globale, ou coût, en fonction des ressources radio nécessaires, **caractérisé en ce qu'**il comporte:
- des moyens (15) pour, dans le cas de canal commun associé à un canal dédié, mettre à jour le crédit de capacité, dans le cas de premier lien radio sur la base d'un coût pour le canal dédié et d'un coût pour le canal commun associé, et dans le cas de lien radio additionnel sur la base du coût pour le canal dédié seul.

14. Contrôleur de stations de base selon la revendication 13, dans lequel lorsqu'un canal Physical Downlink Shared Channel PDSCH est alloué dans une procédure de Radio Link Set-up, le coût de traitement associé à ce canal PDSCH est débité du credit de capacité, en plus du coût de traitement des liens radio.

15. Contrôleur de stations de base selon la revendication 13, dans lequel lorsqu'un canal Physical Downlink Shared Channel PDSCH est effacé, le crédit de capacité est crédité du coût de traitement associé à ce canal PDSCH.

16. Contrôleur de stations de base selon la revendication 13, dans lequel lorsqu'un canal Physical Downlink Shared Channel PDSCH est reconfiguré, la différence entre le nouveau coût et l'ancien coût est débitée du crédit de capacité, ou créditée si cette différence est négative.

## Claims

1. A method of managing processing resources in a mobile radio system in which a base station controller manages radio resources and corresponding processing resources provided in a base station, in which method:
- the base station signals its overall processing capacity to the base station controller, which capacity is also known as its capacity credit, and the amount of said overall processing capacity, which is also known as the consumption law or the cost, as a function of the radio resources that are necessary,
- the base station controller updates the capacity credit on the basis of the consumption law,
- in the case of radio resources corresponding to dedicated channels, a different cost is provided for the first radio link and for additional radio links,
the method being **characterized in that**:
- in the case of radio resources corresponding to a common channel associated with a dedicated channel, said updating is effected, in the case of the first radio link, on the basis of the cost for the dedicated channel and a cost for the associated common channel and, in the case of an additional radio link, on the basis of the cost for the dedicated channel only.

2. A method according to claim 1, wherein:
- in the case of the dedicated channel, the cost for a first radio link includes a cost for a radio link and an additional cost and the cost for an additional radio link includes only the cost for a radio link,
- in the case of a common channel associated with a dedicated channel, said cost for the associated common channel corresponds to the cost of a radio link for the dedicated channel.

3. A method according to claim 1, wherein said cost for the associated common channel is specific to that channel.

4. A method according to any one of claims 1 to 3, wherein said common channel associated with a dedicated channel is a downlink shared channel (DSCH).

5. A method according to any one of claims 1 to 4, **characterized in that** the cost is a function of the spreading factor.

6. A method according to any one of claims 1 to 5, in which, when a Physical Downlink Shared Channel (PDSCH) is allocated in a Radio Link Set-up procedure, the processing cost associated with the PDSCH channel is debited from the capacity credit, in addition to the processing cost of the radio links.

7. A method according to any one of claims 1 to 5, in which, when a Physical Downlink Shared Channel (PDSCH) is deleted, the capacity credit is credited with the processing cost associated with the PDSCH channel.

8. A method according to any one of claims 1 to 5, in which, when a Physical Downlink Shared Channel (PDSCH) is reconfigured, the difference between the new cost and the old cost is debited from the capacity credit, or credited if this difference is negative.

9. A mobile radio system in which:
- a base station includes means (13) for signaling its overall processing capacity to a base station controller, which capacity is also known as its capacity credit, and the amount of said overall processing capacity, which is also known as the cost, as a function of the radio resources that are necessary,
- a base station controller includes means (14) for updating the capacity credit on the basis of the consumption law,
**characterized in that** the base station controller includes means for updating the capacity credit in the case of radio resources corresponding to a common channel associated with a dedicated channel on the basis of the cost for the dedicated channel and a cost for the associated common channel in the case of the first radio link and on the basis of the cost for the dedicated channel only in the case of an additional radio link.

10. A system according to claim 9, in which, when a Physical Downlink Shared Channel (PDSCH) is allocated in a Radio Link Set-up procedure, the processing cost associated with the PDSCH channel is debited from the capacity credit, in addition to the processing cost of the radio links.

11. A system according to claim 9, in which, when a Physical Downlink Shared Channel (PDSCH) is deleted, the capacity credit is credited with the processing cost associated with the PDSCH channel.

12. A system according to claim 9, in which, when a Physical Downlink Shared Channel (PDSCH) is reconfigured, the difference between the new cost and the old cost is debited from the capacity credit, or credited if this difference is negative.

13. A base station controller includes means (14) for receiving its overall processing capacity from a base station (Node B), which capacity is also known as its capacity credit, and the amount of said overall processing capacity, which is also known as the cost, as a function of the radio resources that are necessary, **characterized in that** it includes:
- means (15) for, in the case of a common channel associated with a dedicated channel, updating the capacity credit in the case of the first radio link and on the basis of the cost for the dedicated channel and for the associated common channel, and on the basis of the dedicated channel only in the case of an additional radio link.

14. A base station controller according to claim 13, in which, when a Physical Downlink Shared Channel (PDSCH) is allocated in a Radio Link Set-up procedure, the processing cost associated with the PDSCH channel is debited from the capacity credit, in addition to the processing cost of the radio links.

15. A base station controller according to claim 13, in which, when a Physical Downlink Shared Channel (PDSCH) is deleted, the capacity credit is credited with the processing cost associated with the PDSCH channel.

16. A base station controller according to claim 13, in which, when a Physical Downlink Shared Channel (PDSCH) is reconfigured, the difference between the new cost and the old cost is debited from the capacity credit, or credited if this difference is negative.

## Patentansprüche

1. Verfahren zur Bereitstellung einer Verarbeitungsbetriebsmittelverwaltung in einem mobilen Funkkommunikationssystem, bei dem ein Basisstationcontroller Funkbetriebsmittel und entsprechende Verarbeitungsbetriebsmittel verwaltet, wobei letztere in einer Basisstation vorgesehen sind, und bei diesem Verfahren:
- meldet die Basisstation dem Basisstationcontroller ihre globale Verarbeitungskapazität oder Kapazitätsguthaben und das Verbrauchsgesetz oder Menge dieser globalen Verarbeitungskapazität oder Kosten in Abhängigkeit von den erforderlichen Funkbetriebsmitteln.
- aktualisiert der Basisstationcontroller das Kapazitätsguthaben auf der Grundlage des Verbrauchsgesetzes.
- für den Fall von Funkbetriebsmitteln, die dedizierten Kanälen entsprechen, werden unterschiedliche Kosten vorgesehen für den Fall einer ersten Funkverbindung und für den Fall einer zusätzlichen Funkverbindung,
wobei das Verfahren **dadurch gekennzeichnet ist, dass**:
- für den Fall von Funkbetriebsmitteln, die einem gemeinsamen Kanal entsprechen, der mit einem dedizierten Kanal verknüpft ist, diese Aktualisierung im Falle einer ersten Funkverbindung auf der Grundlage der Kosten für den dedizierten Kanal und der Kosten für den zugehörigen gemeinsamen Kanal erlolgt, und im Falle zusätzlicher Funkverbindungen auf der Grundlage der Kosten lediglich für den dedizierten Kanal.

2. Verfahren gemäß Anspruch 1, bei dem:
- im Falle eines dedizierten Kanals die Kosten für eine erste Funkverbindung die Kosten für eine Funkverbindung und zusätzliche Kosten einschließen, und die Kosten für eine zusätzliche Funkverbindung lediglich die Kosten für eine Funkverbindung einschließen.
- im Falle eines gemeinsamen Kanals, der mit einem dedizierten Kanal verknüpft ist, diese Kosten für den zugehörigen gemeinsamen Kanal den Kosten einer Funkverbindung für den dedizierten Kanal entsprechen.

3. Verfahren gemäß Anspruch 1, bei dem diese Kosten für den zugehörigen gemeinsamen Kanal für diesen Kanal spezifisch sind.

4. Verfahren gemäß einem der Ansprüche bis 3, bei dem dieser gemeinsame Kanal, der mit einem dedizierten Kanal verknüpft ist, ein Kanal vom Typ DSCH Downlink Shared CHannel ist.

5. Verfahren gemäß einem der Ansprüche 1 bis 4, **dadurch gekennzeichnet, dass** die Kosten vom Spreizungsfaktor abhängig sind.

6. Verfahren gemäß einem der Ansprüche 1 bis 5, bei dem wenn bei einem Radio Link Set-up-Vorgang ein Physical Downlink Shared Channel PDSCH-Kanal zugewiesen wird, die mit diesem PDSCH-Kanal verknüpften Verarbeitungskosten dem Kapazitätsguthaben belastet werden, zusätzlich zu den Verarbeitungskosten der Funkverbindungen.

7. Verfahren gemäß einem der Ansprüche 1 bis 5, bei dem wenn ein Physical Downlink Shared Channel PDSCH-Kanal gelöscht wird, das Kapazitätsguthaben um die mit diesem PDSCH-Kanal verknüpften Verarbeitungskosten entlastet wird.

8. Verfahren gemäß einem der Ansprüche 1 bis 5, bei dem wenn ein Physical Downlink Shared Channel PDSCH-Kanal rekonfiguriert wird, das Kapazitätsguthaben mit der Differenz zwischen dem neuen Kostenpunkt und dem alten Kostenpunkt belastet wird oder, falls die Differenz negativ ist, entlastet wird.

9. Mobiles Funkkommunikationssystem bei dem:
- eine Basisstation Mittel (13) einschließt, um an einen Basisstationcontroller ihre globale Verarbeitungskapazität oder Kapazitätsguthaben zu melden und die Menge dieser globalen Verarbeitungskapazität oder Kosten in Abhängigkeit von den erforderlichen Funkbetriebsmitteln,
- ein Basisstationcontroller Mittel (14) einschließt, um das Kapazitätsguthaben auf der Grundlage des Verbrauchsgesetzes zu aktualisieren,
**dadurch gekennzeichnet, dass** der Basisstationcontroller Mittel einschließt, um im Falle von Funkbetriebsmitteln, die einem gemeinsamen Kanal entsprechen, welcher mit einem dedizierten Kanal verknüpft ist, das Kapazitätsguthaben zu aktualisieren, im Falle einer ersten Funk verbindung auf der Grundlage der Kosten für den dedizierten Kanal und von Kosten für den zugehörigen gemeinsamen Kanal, und im Falle einer zusätzlichen Funkverbindung auf der Grundlage der Kosten lediglich für den dedizierten Kanal.

10. System gemäß Anspruch 9, bei dem wenn bei einem Radio Link Set-up-Vorgang ein Physical Downlink Shared Channel PDSCH-Kanal zugewiesen wird, die mit diesem PDSCH-Kanal verknüpften Verarbeitungskosten dem Kapazitätsguthaben belastet werden, zusätzlich zu den Verarbeitungskosten der Funkverbindungen.

11. System gemäß Anspruch 9, bei dem wenn ein Physical Downlink Shared Channel PDSCH-Kanal gelöscht wird, das Kapazitätsguthaben um die mit diesem PDSCH-Kanal verknüpften Verarbeitungskosten entlastet wird.

12. System gemäß Anspruch 9, bei dem wenn ein Physical Downlink Shared Channel PDSCH-Kanal rekonfiguriert wird, das Kapazitätsguthaben mit der Differenz zwischen dem neuen Kostenpunkt und dem alten Kostenpunkt belastet wird oder, falls die Differenz negativ ist, entlastet wird.

13. Basisstationcontroller, der Mittel (14) einschließt, um von einer Basisstation ihre globale Verarbeitungskapazität oder Kapazitätsguthaben zu empfangen und die Menge dieser globalen Verarbeitungskapazität oder Kosten in Abhängigkeit von den erforderlichen Funkbetriebsmitteln, **dadurch gekennzeichnet, dass** er:
- Mittel (15) enthält, um im Falle eines gemeinsamen Kanals, der mit einem dedizierten Kanal verknüpft ist, das Kapazitätsguthaben zu aktualisieren, im Falle einer ersten Funkverbindung auf der Grundlage der Kosten für den dedizierten Kanal und von Kosten für den zugehörigen gemeinsamen Kanal, und im Falle einer zusätzlichen Funkverbindung auf der Grundlage der Kosten lediglich für den dedizierten Kanal.

14. Basisstationcontroller gemäß Anspruch 13, bei dem wenn bei einem Radio Link Set-up-Vorgang ein Physical Downlink Shared Channel PDSCH-Kanal zugewiesen wird, die mit diesem PDSCH-Kanal verknüpften Verarbeitungskosten dem Kapazitätsguthaben belastet werden, zusätzlich zu den Verarbeitungskosten der Funkverbindungen.

15. Basisstationcontroller gemäß Anspruch 13, bei dem wenn ein Physical Downlink Shared Channel PDSCH-Kanal gelöscht wird, das Kapazitätsguthaben um die mit diesem PDSCH-Kanal verknüpften Verarbeitungskosten entlaster wird.

16. Basisstationcontroller gemäß Anspruch 13, bei dem wenn ein Physical Downlink Shared Channel PDSCH-Kanal rekonfiguriert wird, das Kapazitätsguthaben mit der Differenz zwischen dem neuen Kostenpunkt und dem alten Kostenpunkt belastet wird oder, falls die Differenz negativ ist, entlastet wird.
